# EUROPÄISCHE PATENTSCHRIFT

(11) **EP 1 922 529 B1**
(45) Veröffentlichungstag und Bekanntmachung des Hinweises auf die Patenterteilung: **28.04.2010**
(21) Anmeldenummer: 06791319.4
(22) Anmeldetag: 26.08.2006
(51) Int. Cl.: G01F 23/296

(54) **VERFAHREN ZUR MESSUNG DER FÜLLHÖHE UND DER NEIGUNG EINER OBERFLÄCHE EINER FLÜSSIGKEIT**
METHOD FOR MEASURING THE LEVEL AND INCLINATION OF THE SURFACE OF A LIQUID
PROCEDE POUR MESURER LA HAUTEUR DE REMPLISSAGE ET L'INCLINAISON DE LA SURFACE D'UN FLUIDE

(30) Priorität: 07.09.2005 DE 102005042637
(43) Veröffentlichungstag der Anmeldung: 21.05.2008
(73) Patentinhaber: Hella KGaA Hueck & Co., 59552 Lippstadt (DE)
(72) Erfinder: BUHRDORF, Andreas, 28201 Bremen (DE); DOBRINSKI, Heiko, 28359 Bremen (DE)
(74) Vertreter: Siekmann, Gunnar
(86) Internationale Anmeldenummer: PCT/DE2006/001504
(87) Internationale Veröffentlichungsnummer: WO 2007/028356

(56) Entgegenhaltungen:
- EP-A2- 0 676 624
- DE-A1- 19 860 901

## Beschreibung

Die Erfindung betrifft ein Verfahren zur Messung der Füllhöhe und der Neigung einer Oberfläche einer Flüssigkeit, insbesondere von Öl in einem Behälter, bei dem ein Ultraschallwandler eine Ultraschallwelle aussendet und ein an der Oberfläche reflektiertes Signal empfängt und wobei die Laufzeit des empfangenen Signals gemessen wird. Derartige Ölbehälter sind insbesondere in Kraftfahrzeugen vorgesehen.

Bekannt ist beispielsweise ein derartiges Verfahren und eine Vorrichtung aus der DE 198 60 901 A1. Hier werden mit einem Sensormittel verschiedene Ultraschallimpulse angestrahlt und deren reflektiertes Signal wird empfangen und durch Laufzeitmessungen ausgewertet. Dadurch kann der Abstand der Flüssigkeitsoberfläche zu dem Sensor an mehreren Punkten gemessen werden. Wenn drei Punkte gemessen werden, kann daraus im sogenannten Triangulationsverfahren die genaue Lage und Ausrichtung einer Oberfläche ermittelt werden.

Der Erfindung liegt die Aufgabe zugrunde, ein Verfahren der eingangs genannten Art zu schaffen, das mit einem möglichst geringen konstruktiven Aufbau auskommt und daher besonders kostengünstig durchzuführen ist.

Die Lösung dieser Aufgabe erfolgt mit einem Verfahren mit den Merkmalen des Patentanspruchs 1. Vorteilhafte Weiterbildungen der Erfindung sind in den Unteransprüchen angegeben.

Bei einem Verfahren zur Messung der Lage und der Neigung einer Oberfläche einer Flüssigkeit, insbesondere von Öl in einem Behälter, bei dem ein Ultraschallwandler eine Ultraschallwelle aussendet und ein an der Oberfläche reflektiertes Signal empfängt, wobei die Laufzeit des empfangenen Signals gemessen wird, ist es erfindungswesentlich, daß die Intensität des empfangenen Signals gemessen wird und daß auf Basis der gemessenen Laufzeit, der gemessenen Intensität und einer bekannten Schallfeldcharakteristik der ausgestrahlten Ultraschallwelle die Füllhöhe und die Neigung der Oberfläche ermittelt werden. Durch die erfindungsgemäße Auswertung der Intensität der reflektierten Ultraschallwelle kann auf besonders einfache Weise bzw. mit einem besonders einfachen Aufbau eine zusätzliche Information über die Neigung der Oberfläche einer Flüssigkeit erhalten werden. Die zusätzliche Auswertung der Intensität erspart einen zweiten Messvorgang bzw. einen zusätzlichen Ultraschallwandler. Dabei ist jedoch Voraussetzung, daß die Schallfeld-charakteristik der ausgestrahlten Ultraschallwelle bekannt ist. Dabei wird davon ausgegangen, daß die Schallfeldcharakteristik keulenförmig ist. Insbesondere wird vorausgesetzt, daß die Intensität der abgestrahlten Ultraschallwelle richtungsabhängig ist, d. h. in der Hauptrichtung maximal und in den seitlich etwas daneben liegenden Richtungen etwas schwächer ist.

Die Ultraschallwelle wird von einem Ultraschallwandler ausgesandt und bevorzugt auch von demselben Ultraschallwandler wieder empfangen. Denkbar ist jedoch auch, daß Sender und Empfänger getrennt ausgebildet sind. Der Begriff des Ultraschallwandlers ist weit zu verstehen. Es können auch elektro-akustische Wandler verwendet werden, die akustische Wellen aussenden. Bevorzugt wird jedoch ein Ultraschallwandler im engeren Sinne verwendet.

In einer bevorzugten Weiterbildung der Erfindung wird bei der Berechnung der Lage und der Neigung der Oberfläche die Eigenschaft der Flüssigkeit berücksichtigt. Insbesondere wird die akustische Dämpfung berücksichtigt. Dieses ist insbesondere dann wichtig, wenn sich die Öleigenschaften der Flüssigkeit, insbesondere die akustischen Öleigenschaften ändern. Die Intensität, die am Empfänger empfangen bzw. gemessen wird, ergibt sich daher als Produkt aus einem dämpfungsabhängigen Parameter mit der durchlaufenen Höhe der Flüssigkeit bzw. des Öls und der gesendeten Signalintensität. Die Signalintensität ist abhängig vom Neigungswinkel und der Ansteuerspannung. Zur Berücksichtigung der Eigenschaft der Flüssigkeit bzw. des dämpfungsabhängigen Parameters wird bevorzugt eine Messung an einer Referenzstrecke durchgeführt. Bei einer solchen Referenzstrecke ist die Höhe oder die Entfernung bekannt, so daß bei bekannter Sendeintensität und gemessener Empfängerintensität der dämpfungsabhängige Parameter bestimmt werden kann.

In einer bevorzugten Anwendung der Erfindung wird nur ein einziger Ultraschallwandler verwendet und aus den gemessenen Werten, nämlich der gemessenen Laufzeit und der gemessenen Intensität des empfangenen Ultraschallsignals wird die Füllhöhe und die Neigung der Oberfläche der Flüssigkeit ermittelt. Bei einer radial-symetrischen Abstrahlcharakteristik des Ultraschallwandlers kann durch diesen zweiten Meßwert die Entfernung sowie die Neigung der Grenzfläche Flüssigkeit -Gas bzw. Öl-Luft ermittelt werden. Es verbleibt nur noch ein Freiheitsgrad hinsichtlich des Rotationswinkel der geneigten Ebene, der so nicht bestimmt wird.

In einer anderen bevorzugten Anwendung kann bei Verwendung von zwei Ultraschallwandlern die Füllhöhe, die Neigung und die Orientierung der Neigung ermittelt werden. Durch Verwendung eines zweiten Ultraschallwandlers, der bevorzugt geneigt zu dem ersten Ultraschallwandler ausgerichtet ist, kann in einer zweiten Richtung ebenfalls eine Laufzeitmessung durchgeführt werden. Dort kann also eine zweite Entfernungsmessung durchgeführt werden. Durch die Messung von zwei Entfernungen und einer Intensität sind drei Punkte der Ebene der Flüssigkeitsoberfläche bestimmbar, so daß auf diese Weise die genaue Lage, Entfernung und Ausrichtung der Oberfläche ermittelt werden kann.

Nachfolgend wird die Erfindung anhand eines in der Zeichnung dargestellten Ausführungsbeispiels weiter erläutert. Im einzelnen zeigen die schematischen Darstellungen in:
- Fig. 1: eine Darstellung des erfindungsgemäßen Verfahrens bei einer geraden Oberfläche der Flüssigkeit;
- Fig. 2: eine Darstellung des erfindungsgemäßen Verfahrens bei Messung an einer geneigten Oberfläche;
- Fig. 3: eine Anordnung bei Verwendung von zwei Ultraschallwandlern.

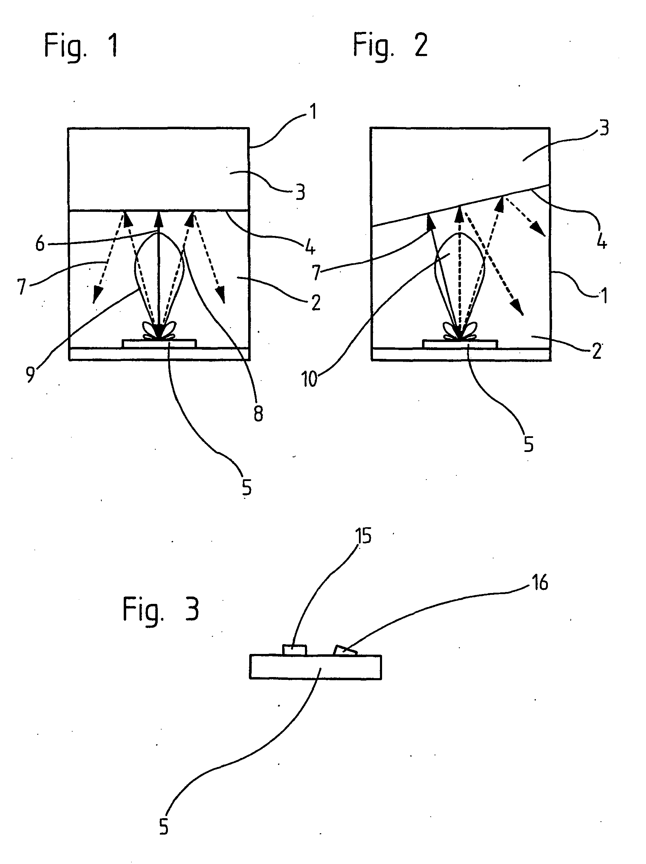

In Fig. 1 ist ein Behälter 1 zur Aufnahme einer Flüssigkeit 2 dargestellt. Oberhalb der Flüssigkeit 2 ist in dem Behälter 1 ein Bereich mit Luft 3 vorhanden. Der hier eckig dargestellte Behälter 1 kann jede Art von Form haben. Er kann insbesondere auch eine Ölwanne sein. Die Grenzschicht zwischen Öl und Luft 3 bildet eine Oberfläche 4 aus, an der von einem Ultraschallwandler 5 ausgestrahlte Ultraschallwellen 6, 7 und 8 reflektiert werden. Die Ultraschallwelle 6, 7, 8 hat eine bestimmte Schallfeldcharakteristik 9, die hier mit der Keule 10 dargestellt ist. Entsprechend dieser Keule 10 werden die Ultraschallwellen 6, 7, 8 mit unterschiedlicher Intensität in verschiedene Richtungen abgestrahlt. In dem gezeigten Ausführungsbeispiel wird die senkrecht nach oben ausgestrahlte Ultraschallwelle 6, an der Oberfläche 4 reflektiert und vom Ultraschallwandler 5 wieder empfangen. Neben der Laufzeit der Ultraschallwelle als Funktion der Entfernung des Ultraschallwandlers 5 zur Grenzfläche Flüssigkeit -Gas bzw. Öl-Luft, also der Oberfläche 4 wird zur Neigungserkennung die Schallfeldcharakteristik 9 des Ultraschallwandlers 5 ausgenutzt. Unter der Annahme, daß der Ultraschallwandler 5 eine richtungsabhängige Amplitude der Ultraschallwelle 6, 7, 8 erzeugt, also nicht in alle Raumrichtungen gleichmäßig abstrahlt, kann die reflektierte Amplitude zur Messung des Neigungswinkels zwischen der Grenzfläche Öl-Luft und der Ebene des Ultraschallwandlers 5 benutzt werden. Bei einer planparallelen Ausrichtung der Oberfläche 4 zur Ebene des Ultraschallwanlders 5, kommt an diesem der "Hauptstrahl" 6 als reflektiertes Signal an.

Bei der in Figur 2 dargestellten Messsituation, bei der die Oberfläche 4 geneigt ist trifft nur noch ein "Nebenstrahl" 7 mit geringerer Intensität auf den Ultraschallwandler 5. Weil der Ölpegel ebenfalls die Signalintensität beeinflußt, d. h. höhere Ölpegel oder Flüssigkeitspegel zu einer höheren Signaldämpfung führen, müssen für die Neigungserkennung sowohl die Laufzeit als auch die Signalamplitude ausgewertet werden. Die Abstrahlcharakteristik 9 des Ultraschallwandlers 5 muß dazu bekannt sein und in einer Auswerteeinheit, insbesondere in einem Mikrocontrollor gespeichert werden. Zum Ausgleich sich ändernder Öleigenschaften oder Flüssigkeitseigenschaften, in diesem Fall der akustischen Dämpfung, wird eine von einem Referenzreflektor empfangene Signalamplitude gemessen. Betrachtet man den Ultraschallwandler im Vergleich zur Grenzfläche Flüssigkeit-Gas als Punktquelle bzw. ist der Durchmesser des Ultraschallwandlers 5 sehr viel kleiner als die Füllhöhe, so kann der Messfehler aufgrund der geringeren Laufzeit durch die geneigte Ebene vernachlässigt werden. Bei einer radialsymmetrischen Abstrahlcharakteristik des Ultraschallwandlers ist durch diese "Zwei-Punkt-Messung" die Entfernung sowie die Neigung der Grenzfläche Flüssigkeit-Luft ermittelbar, wobei noch ein Freiheitsgrad hinsichtlich des Rotationswinkels der geneigten Ebene offen bleibt.

In Figur 3 ist ein Ultraschallwandler 5 dargestellt, der zwei Ultraschallwandler 15 und 16 aufweist. Zur kompletten Erkennung und Messung einer räumlichen Neigung ist die Kenntnis von mindestens drei Punkten im Raum notwendig. Das erfindungsgemäße Verfahren kann dazu mit zwei Ultraschallwandlern 15, 16 durchgeführt werden, wobei ein Ultraschallwandler 15 sowohl die Laufzeit mißt also auch eine Amplitudenbewertung durchführt. Mit dem zweiten Ultraschallwandler 16, der in einem Winkel zum Ultraschallwandler 15 ausgerichtet ist, kann ebenfalls eine Laufzeitmessung durchgeführt werden. Damit sind drei Punkte bekannt, mit denen eine Ebene bestimmt wird. Zusätzlich kann mit dem Ultraschallwandler 16 auch noch eine Amplitudenbewertung durchgeführt werden. Dann ist eine zusätzlicher Meßwert bekannt. Auf diese Weise können Messfehler oder Messungenauigkeiten mathematisch ausgeglichen werden und es kann eine besonders sichere und zuverlässige Bestimmung durchgeführt werden.

## Patentansprüche

1. Verfahren zur Messung der Füllhöhe und der Neigung einer Oberfläche (4) einer Flüssigkeit (2), insbesondere von Öl in einem Behälter (1), bei dem ein Ultraschallwandler (5) eine Ultraschallwelle (6, 7, 8) aussendet und ein an der Oberfläche (4) reflektiertes Signal empfängt und wobei die Laufzeit des empfangenen Signals gemessen wird
**dadurch gekennzeichnet,**
**daß** die Intensität des empfangenen Signals gemessen wird und
**daß** auf der Basis der gemessenen Laufzeit, der gemessenen Intensität und einer bekannten Schallfeldcharakteristik (9) der ausgestrahlten Ultraschallwelle (6, 7, 8) die Füllhöhe und die Neigung der Oberfläche (4) ermittelt werden.

2. Verfahren nach Anspruch 1, **dadurch gekennzeichnet, daß** bei der Berechnung der Lage und der Neigung der Oberfläche (4) die Eigenschaften der Flüssigkeit (2) berücksichtigt werden.

3. Verfahren nach Anspruch 2, **dadurch gekennzeichnet, daß** zur Ermittlung der Eigenschaften der Flüssigkeit (2) eine Messung an einer Referenzstrecke durchgeführt wird.

4. Verfahren nach einem der vorhergehenden Ansprüche, **dadurch gekennzeichnet, daß** nur ein einziger Ultraschallwandler (5) verwendet wird und daß die Füllhöhe und die Neigung der Oberfläche (4) ermittelt werden.

5. Verfahren nach einem der Ansprüche 1 bis 3, **dadurch gekennzeichnet, daß** bei Verwendung von zwei Ultraschallwandlern (13,14) die Füllhöhe, die Neigung und die Orientierung der Neigung ermittelt werden.

## Claims

1. A method for measuring the filling level and incline of a surface (4) of a liquid (2), particularly oil in a container (1), in which an ultrasound converter (5) transmits an ultrasound wave (6, 7, 8) and receives a signal reflected on the surface (4) and wherein the delay of the received signal is measured,
**characterised in that**,
the intensity of the received signal is measured and that based on the measured delay, the measured intensity and a known sound field characteristic (9) of the radiated ultrasound wave (6, 7, 8) the filling level and incline of the surface (4) are determined.

2. The method according to claim 1, **characterised in that** the properties of the liquid (2) are taken into account when calculating the position and incline of the surface (4).

3. The method according to claim 2, **characterised in that** a measurement is taken of a reference section to determine the properties of the liquid (2).

4. The method according to one of the preceding claims, **characterised in that** only a single ultrasound converter (5) is used and that the filling level and incline of the surface (4) are determined.

5. The method according to one of the claims 1 to 3, **characterised in that** the filling level, incline and orientation of the incline are determined when using two ultrasound converters (13, 14).

## Revendications

1. Procédé pour mesurer la hauteur de remplissage et l'inclinaison d'une surface (4) d'un liquide (2), en particulier de l'huile dans un récipient (1), avec lequel un transducteur d'ultrasons (5) émet une onde ultrasonore (6, 7, 8) et reçoit un signal réfléchi sur la surface (4) et le temps de parcours du signal reçu étant mesuré,
**caractérisé en ce que**
l'intensité du signal reçu est mesurée et
**en ce que** la hauteur de remplissage et l'inclinaison de la surface (4) sont déterminées sur la base du temps de parcours mesuré, de l'intensité mesurée et d'une caractéristique de champ sonore (9) connue de l'onde ultrasonore (6, 7, 8) émise.

2. Procédé selon la revendication 1, **caractérisé en ce que** les propriétés du liquide (2) sont prises en compte pour le calcul de la position et de l'inclinaison de la surface (4).

3. Procédé selon la revendication 2, **caractérisé en ce qu'**une mesure est mise en oeuvre sur un tronçon de référence pour déterminer les propriétés du liquide (2).

4. Procédé selon l'une quelconque des revendications précédentes, **caractérisé en ce qu'**on n'utilise qu'un unique transducteur d'ultrasons (5) et **en ce que** la hauteur de remplissage et l'inclinaison de la surface (4) sont déterminées.

5. Procédé selon l'une quelconque des revendications 1 à 3, **caractérisé en ce que** la hauteur de remplissage, l'inclinaison et l'orientation de l'inclinaison sont déterminées lorsqu'on utilise deux transducteurs d'ultrasons (13, 14).
